Europäisches Patentamt

European Patent Office

Office européen des brevets

(11) Numéro de publication : **0 454 574 A1**

# (12) DEMANDE DE BREVET EUROPEEN

(21) Numéro de dépôt : **91401084.8**

(51) Int. Cl.⁵ : **F16L 37/084**

(22) Date de dépôt : **24.04.91**

(30) Priorité : 25.04.90 FR 9005287

(43) Date de publication de la demande :
30.10.91 Bulletin 91/44

(84) Etats contractants désignés :
AT BE CH DE DK ES GB GR IT LI LU NL SE

(71) Demandeur : Etablissements CAILLAU
28, rue Ernest Renan
F-92130 Issy-les-Moulineaux (FR)

(72) Inventeur : Calmettes, Lionel
84, Faubourg d'Orléans
F-41200 Romorantin Lanthenay (FR)
Inventeur : Detable, Pascal
La Gaillardière, Villefranche s/Cher
F-41200 Romorantin Lanthenay (FR)

(74) Mandataire : Descourtieux, Philippe et al
CABINET BEAU de LOMENIE 55 rue
d'Amsterdam
F-75008 Paris (FR)

(54) Dispositif déverrouillable pour l'immobilisation axiale d'un tube lisse dans un embout.

(57) Dispositif destiné entrer dans la constitution d'un embout pour le raccordement rapide et étanche d'un tube lisse, rigide ou semi-rigide, et permettant aussi bien l'immobilisation axiale du tube dans l'embout que son extraction de celui-ci. Il comporte un manchon (1) définissant un logement cylindrique (1a) et présentant un alésage d'entrée (1b) et une fente longitudinale (1d). Une rondelle annulaire (2) est placée dans le logement cylindrique (1a) du manchon, cependant qu'un ressort (3) prend appui, d'une part, sur la rondelle (2), d'autre part, sur une butée (4) disposée dans le logement cylindrique (1a). Une bague (5) coulissante à l'extérieur du manchon, comporte unesaillie (5d) susceptible de prendre appui sur la rondelle (2).

EP 0 454 574 A1

# FIG.1b

# FIG.1a

F

On connaît déjà des embouts permettant le raccordement rapide et étanche d'un tube lisse, rigide ou semi-rigide, la fixation axiale du tube dans l'embout étant assurée par une rondelle annulaire rigide, généralement soumise à l'action d'un ressort, dont la périphérie interne est susceptible de s'ancrer dans la paroi du tube. De tels embouts sont décrits notamment dans le brevet US-A-2.360.732 ainsi que dans les brevets FR-A-1.403.312 et 1.535.163.

Cependant les embouts connus antérieurement sont limités à des types particuliers de raccordement et ne permettent pas la fabrication de sous-ensembles susceptibles d'être utilisés pour différents types d'embout.

Dans un souci de rationaliser les fabrications et par conséquent de diminuer les coûts, on a eu l'idée de concevoir, pour constituer le dispositif d'immobilisation axiale d'un tube dans son embout, un sous-ensemble standard. Il pourra être facilement assemblé à divers corps d'embout en fonction des exigences des utilisateurs, notamment s'il s'agit de raccorder entre eux deux éléments d'un conduit pour liquide, quel que soit le mode de raccordement de l'embout à l'un des éléments du conduit.

C'est ainsi, par exemple, que le dispositif d'immobilisation axiale du tube lisse pourra être assemblé sur le corps d'un embout dont l'une des extrémités est conformée pour recevoir un tuyau souple fixé au moyen d'un collier de serrage. Egalement le corps d'embout pourra recevoir à chacune de ses extrémités un dispositif d'immobilisation d'un tube lisse. A cet égard on notera que le corps d'embout comportera généralement deux extrémités alignées, mais rien n'empêche d'imaginer que ce corps d'embout présente trois extrémités (raccord en T) ou même quatre extrémités (raccord en croix).

Selon l'invention le dispositif d'immobilisation axiale d'un tube lisse, qui doit également permettre le démontage du tube et son extraction de l'embout comporte les élements suivants :

a) - un manchon définissant un logement cylindrique, dont l'une des extrémités présente un alésage d'entrée, de diamètre inférieur à celui du logement, la paroi du manchon présentant en outre au moins une fente longitudinale s'étendant seulement jusqu'au voisinage de l'alésage d'entrée

b) - au moins une rondelle annulaire, constituant de façon connue une butée escamotable pour le tube à raccorder, dont le diamètre interne est voisin de et au plus égal à celui de l'alésage, cependant que son diamètre externe est voisin de et au plus égal à celui du logement cylindrique du manchon

c) - un organe élastique, par exemple un ressort hélicoïdal, ménageant un espace libre cylindrique dont le diamètre est au moins égal à celui de l'alésage d'entrée, ledit organe élastique prenant appui sur la rondelle, vers l'alésage d'entrée du manchon

d) - une butée d'appui pour l'organe élastique, disposée dans le logement cylindrique du manchon à l'extrémité opposée à celle de l'alésage d'entrée

e) - enfin, une bague de déverrouillage montée coulissante à l'extérieur du manchon et comportant une saillie radiale intérieure susceptible d'être engagée dans la fente du manchon et de prendre appui sur la rondelle, du côté opposé à l'organe élastique.

Grâce à ces dispositions le fabricant d'embouts de raccordement peut disposer de stocks de sous-ensembles standards qui seront assemblés à des corps d'embouts en fonction des besoins de la clientèle.

L'invention sera mieux comprise et diverses caractéristiques secondaires apparaîtront au cours de la description qui va suivre d'un exemple d'exécution, en référence aux dessins annexés dans lesquels :

– Les figures 1a et 1b sont une vue en coupe axiale d'un dispositif d'immobilisation et de déverrouillage selon l'invention, avant son montage sur un corps d'embout

– La figure 2 est une vue suivant la flèche F de la figure 1a

– La figure 3 est une vue de face d'une rondelle d'ancrage

– La figure 4 est une vue extérieure, partiellement en coupe axiale et avec arrachement, d'un embout complet pour le raccordement d'un tube lisse

– La figure 5 est une vue analogue à celle de la figure 4 dans le cas d'un embout pour le raccordement de deux tubes lisses.

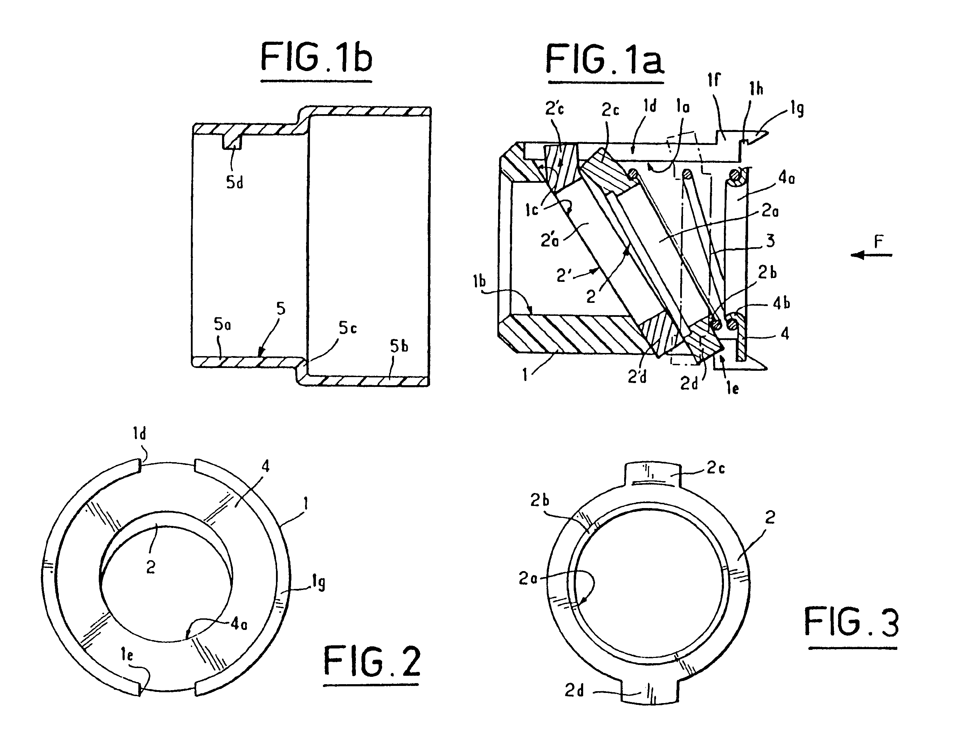

Si l'on se reporte tout d'abord aux figures 1 à 3 on voit un dispositif d'immobilisation axiale d'un tube lisse, tel qu'il peut être stocké chez un fabricant d'embouts de raccordement. Il est constitué par un ensemble de cinq éléments fonctionnels, pour partie préassemblés.

Un manchon **1**, de préférence en matière plastique, définit un logement cylindrique **1a** destiné à recevoir, d'une part, au moins une rondelle métallique **2**, d'autre part, un organe élastique **3**, tel qu'un ressort hélicoïdal, disposé entre la rondelle **2** et une butée d'appui **4**, elle-même située ou fixée à l'une des extrémités du manchon **1**. Ces quatre premiers éléments sont complétés par une bague **5**, dite de déverrouillage, susceptible d'être montée coulissante sur le manchon **1**.

A son extrémité, située à gauche de la figure 1a, le manchon **1** présente un alésage **1b** dont le diamètre - qui correspondra sensiblement à celui du tube reçu par un embout de raccordement - est inférieur à celui du logement cylindrique **1a**.

De préférence, et comme on le voit bien sur le dessin, la face terminale 1c de l'alésage, située à droite de la figure, est inclinée par rapport à l'axe du manchon 1 et constitue ainsi un épaulement interne plan dans le logement 1a.

D'autre part, la paroi du manchon 1 comporte une fente longitudinale 1d débouchant de préférence à l'extrémité droite du manchon et s'étendant vers la gauche seulement jusqu'au voisinage de l'alésage d'entrée 1b. La fente 1d sera avantageusement disposée, comme on le voit sur les dessins, dans le plan diamétral du manchon, perpendiculairement au plan de l'épaulement interne 1c, du côté où l'alésage 1b présente la plus faible longueur.

Une deuxième fente longitudinale 1e, analogue à la fente 1d, est prévue dans la région diamétralement opposée à cette dernière; toutefois, la longueur de la fente 1e est plus petite que celle de la fente 1d, puisqu'elle s'étend seulement jusqu'au voisinage de l'épaulement interne 1c, du côté où l'alésage 1b présente la plus grande longueur.

A son extrémité opposée à l'alésage d'entrée 1b, le manchon 1 présente un épaulement externe 1f, se prolongeant vers la droite par une entrée conique 1g. Le logement 1a se termine par une rainure annulaire 1h dont le plus grand diamètre est supérieur au plus petit diamètre interne de l'entrée conique 1g. On signalera ici que l'existence de l'épaulement 1f est avantageuse car elle permet de limiter l'épaisseur de la paroi du manchon dans la région du logement 1a. Bien plus, cet épaulement 1f constituera une butée extérieure dans des conditions qui seront précisées plus loin.

La rondelle métallique 2 présente un diamètre extérieur voisin de celui du logement 1a et de préférence légèrement inférieur à celui-ci, de façon qu'elle puisse facilement coulisser dans le logement lorsqu'elle est perpendiculaire à l'axe de ce dernier. Le diamètre intérieur de la rondelle 2 est lui-même voisin de celui de l'alésage d'entrée 1b et de préférence au plus égal à celui-ci. L'orifice 2a de la rondelle est avantageusement délimité, du côté opposé à l'alésage d'entrée, par un petit épaulement cylindrique 2b dont le rôle apparaîtra plus loin. Les arêtes de l'orifice 2a, sur chaque face de la rondelle 2 sont de préférence des arêtes vives dont le rôle sera également souligné plus loin.

Bien que la rondelle 2 soit suffisante dans un grand nombre d'applications, il peut être avantageux de prévoir une deuxième rondelle 2' dont les diamètres intérieur et extérieur ainsi que les arêtes de l'orifice sont pratiquement identiques à ceux de la rondelle 2.

La rondelle 2 ainsi que, le cas échéant, la rondelle 2' comportent au moins une saillie radiale 2c et 2'c, dont la largeur est voisine de celle de la fente 1d du manchon et dont la hauteur radiale est de préférence au plus égale à l'épaisseur de la paroi du manchon dans la zone du logement cylindrique 1a.

On a signalé plus haut qu'une fente 1e pouvait être prévue sur le manchon 1. Dans la mesure où elle existe, il est avantageusement prévu, sur la rondelle 2 (ou 2') une saillie radiale 2d (ou 2'd), diamétralement opposée à la saillie radiale 2c (ou 2'c), dont les formes correspondent à celles de la fente 1e.

De toutes façons, la rondelle 2 peut prendre appui sur l'épaulement plan interne 1c du manchon, le cas échéant par l'intermédiaire de la rondelle 2'. La rondelle 2 (de même que la rondelle 2') peut également être amenée à occuper une position (représentée en trait ponctué) perpendiculaire à l'axe du manchon, son orifice se trouvant alors aligné avec l'alésage d'entrée 1b.

Un organe élastique 3 prenant appui sur une butée 4 disposée dans le logement 1a du manchon, exerce son effort sur la face de la rondelle 2, opposée à l'alésage d'entrée 1b, et maintient cette dernière en position inclinée, de préférence en appui (éventuellement par l'intermédiaire de la rondelle 2') sur l'épaulement interne 1c du manchon.

Dans l'exemple représenté, l'organe élastique 3 est un ressort hélicoïdal dont la première spire entoure l'épaulement cylindrique 2b de la rondelle 2 et est ainsi guidée par ce dernier. Les spires du ressort 3 ou tout autre organe élastique ménagent dans le logement 1a un espace libre dont le diamètre est au moins égal à celui de l'alésage 1b.

La butée d'appui peut faire corps avec le manchon 1 ou, de préférence, être constituée par une plaque métallique annulaire 4 dont l'orifice central 4a, délimité par un bord 4b dirigé vers l'alésage d'entrée 1b, présente un diamètre au moins égal à celui dudit alésage. La gorge circulaire formée par le bord 4b reçoit la spire terminale du ressort 3. La périphérie extérieure de la plaque 4 a un diamètre et une épaisseur correspondant sensiblement à ceux de la rainure 1h du manchon.

Enfin une bague 5, de préférence en matière plastique, présente essentiellement une première portion cylindrique 5a dont le diamètre intérieur correspond sensiblement au diamètre extérieur du manchon de façon à pouvoir coulisser sur ce dernier. Une deuxième portion cylindrique 5b, dont le diamètre intérieur est supérieur à celui de la première portion, prolonge cette dernière à laquelle elle est raccordée par une paroi radiale 5c.

Une saillie radiale interne 5d est prévue dans la première portion de la bague. Sa largeur est au plus égale à celle de la fente 1d du manchon tandis que sa hauteur est voisine de l'épaisseur de la paroi du logement 1a et de préférence au plus égale à cette épaisseur.

La longueur de la première portion 5a de la bague et la position axiale de la saillie 5d sur cette première portion sont déterminées de telle façon que la bague recouvre toujours l'extrémité d'entrée du manchon, quelle que soit la position de la saillie **5d** dans la fente **1d**. Vers la gauche le coulissement de la bague sur le manchon est limité par l'appui de la saillie radiale sur l'extrémité de la fente **1d**, tandis que vers la droite ce mouvement est limité par l'appui de la paroi radiale **5c** sur l'épaulement **1f** du manchon.

Ayant ainsi décrit les éléments essentiels d'un dispositif d'immobilisation axiale d'un tube lisse sur un embout on va maintenant montrer comment cet ensemble peut être utilisé sur divers corps d'embout.

Préalablement à cette utilisation on notera que le montage du sous-ensemble qui vient d'être décrit s'effectue facilement. On engage tout d'abord la rondelle **2**, éventuellement la rondelle **2'**, dans le logement **1a** du manchon. La première spire du ressort **3** est elle-même disposée autour de l'épaulement **2b** de la rondelle **2**, puis, la dernière spire du ressort étant placée dans la gorge du bord **4b** de la butée **4**, cette dernière est présentée à l'entrée conique **1g** du manchon. Une pression axiale dans le sens de la flèche **F** sur la butée **4** permet de clipser sa périphérie externe dans la rainure **1h** du manchon. Cette dernière opération est rendue possible, aussi bien par l'élasticité du matériau constituant le manchon que par la présence des fentes **1d** et **1c**. Dans certain cas on pourra même prévoir de petites fentes longitudinales supplémentaires, uniquement dans la région de l'entrée conique **1g**.

La rondelle **2**, ainsi éventuellement que la rondelle **2'**, prennent les positions représentées sur la figure **1a** et l'ensemble ainsi monté peut être stocké avec la bague **5** avant d'être manipulé pour constituer un embout complet de raccordement pour tube lisse.

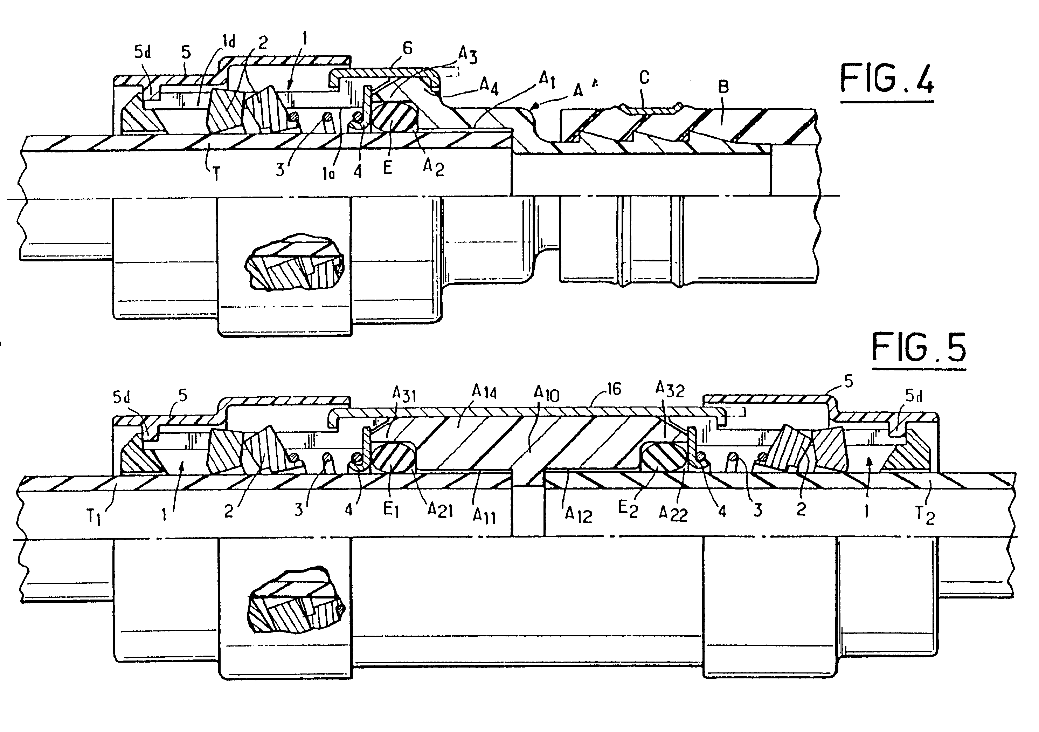

Si l'on se reporte maintenant à la figure 4, on voit un embout complet, dont le corps **A**, d'un type connu, reçoit par emmanchement un tuyau souple **B** qui y est immobilisé par un collier de serrage **C**. Le corps **A** présente, d'une part, un logement cylindrique **A₁** avec une butée axiale pour recevoir le tube lisse **T** à raccorder, d'autre part, une gorge **A₂** pour un jonc annulaire d'étanchéité **E**. On notera que cette gorge est ouverte à l'extrémité du corps d'embout, bien que cette disposition ne soit pas indispensable. Dans la région entourant la gorge **A₂**, le corps d'embout **A** présente, de préférence, une forme conique saillante **A₃** prolongée vers la droite par une partie cylindrique définissant elle-même un épaulement **A₄** avec le reste du coprs **A**.

L'assemblage d'un sous-ensemble précédemment décrit sur un corps d'embout s'effectue alors après avoir apparié les deux éléments de telle sorte que le diamètre extérieur de l'épaulement **1f** soit sensiblement égal à celui de l'épaulement **A₄** du corps d'embout et que le diamètre de l'alésage d'entrée **1b** soit sensiblement égal à celui du logement cylindrique **A₁** du corps.

On enfile tout d'abord sur le sous-ensemble représenté sur la figure 1a une bague métallique cylindrique 6 dont l'extrémité gauche comporte un bord **6a** venant en appui sur l'épaulement **1f** du manchon. Le corps d'embout **A**, muni du jonc d'étanchéité **E** dans la gorge **A₂**, est ensuite présenté à l'entrée de la bague **6** et enfoncé jusqu'à ce que sa forme conique saillante **A₃** vienne en appui sur la butée **4**. Cette dernière ferme alors la gorge **A₂** comme on le voit sur la figure 4.

La fixation du corps **A** sur le sous-ensemble d'immobilisation est obtenue par un simple sertissage de l'extrémité libre (initialement dans la position représentée en trait ponctué) de la bague **6** derrière l'épaulement **A₄** du corps **A**.

La bague de déverrouillage **5** est enfin enfilée sur le manchon **1**, sa saillie radiale interne **5d** étant forcée au-delà de l'alésage d'entrée **1b** pour venir prendre place dans la fente **1d** du manchon.

Comme on le voit bien sur la figure 4, la portion de plus grand diamètre **5b** de la bague **5** recouvre quelque peu la bague **6** lorsque la saillie **5d** est en appui sur l'extrémité fermée de la fente **1d**. Ainsi la bague **5** constitue un organe d'étanchéité empêchant toute introduction d'élément non désiré dans les fentes **1d** et **1e**.

Ansi qu'on le sait par l'enseignement des brevets mentionnés plus haut, le raccordement d'un tube lisse **T** s'effectue simplement en le faisant pénétrer dans l'embout complet par l'alésage **1b** jusqu'à ce qu'il atteigne le fond du logement **A₁** du corps.

Au cours de ce mouvement le tube **T** repousse la rondelle **2** (et éventuellement la rondelle **2'**) qui pivoter dans le logement **1a** du manchon pour prendre la position représentée en trait ponctué sur la figure 1b. L'orifice **2a** peut alors être traversé par le tube **T** qui, après avoir franchi le jonc **E** en le repoussant dans la gorge **A₂**, atteindra le fond du logement **A₁**. On sait que l'extraction du tube **T** de l'embout est normalement empêchée par l'ancrage de certaines portions des arêtes vives de l'orifice **2a** de la rondelle **2** (et éventuellement de la rondelle **2'**) dans la paroi extérieure du tube. On notera ici que ce dernier peut être en matériau rigide, tel qu'un métal, ou semi-rigide, tel qu'une matière plastique, les embouts du type décrit ne présentant pas de contrainte particulière à cet égard.

Si l'on veut démonter le raccordement et extraire le tube **T** de son embout, ou fait coulisser la bague **5** sur le manchon **1** en direction du corps d'embout **A**. La saillie radiale interne **5d** repousse les rondelles **2'** et **2** en s'appuyant sur leur saillie radiale (**2'c** et **2c**) jusqu'à ce que leur plan soit perpendiculaire à l'axe du tube **T**, escamotant ainsi les butées d'ancrage que constituaient des arêtes vives des rondelles. Le tube **T** peut alors être facilement extrait de l'embout.

Si l'on se reporte enfin à la figure 5 on voit un embout susceptible de recevoir à ses deux extrémités opposées des tubes lisses **T₁** et **T₂**.

Le corps **A₁₀** est cylindrique et comporte deux

logements opposés $A_{11}$ et $A_{12}$ pour les deux tubes ainsi que deux gorges $A_{21}$ et $A_{22}$, analogues à la gorge $A_2$ du corps d'embout précédemment décrit, pour les joncs d'étanchéité $E_1$ et $E_2$. Les extrémités coniques saillantes $A_{31}$ et $A_{32}$ du corps sont raccordées l'une à l'autre par une portion cylindrique $A_{14}$.

Après avoir enfilé, de gauche à droite, une bague métallique 16 - analogue à la bague 6 précédemment décrite - sur un premier sous-ensemble d'immobilisation axiale des tubes, on présente le corps d'embout $A_{10}$ dont l'extrémité saillante $A_{31}$ vient prendre appui sur la butée 4 du premier sous-ensemble.

Le deuxième sous-ensemble est alors engagé, de droite à gauche, dans l'extrémité libre de la bague 16 et la fixation des trois éléments est obtenue par un simple sertissage de cette extrémité libre (initalement dans la position représentée en trait ponctué) derrière l'épaulement 1f du deuxième sous-ensemble.

L'embout est enfin complété par le montage des bagues de déverrouillage 5 de chacun des sous-ensembles d'immobilisation des tubes dans les mêmes conditions que celles décrites en référence à la figure 4.

La mise en place ou l'extraction des tubes $T_1$ et $T_2$ s'effectue d'une façon analogue à ce qui a été précédemment décrit.

**Revendications**

1. Dispositif destiné à entrer dans la constitution d'un embout pour le raccordement rapide et étanche d'un tube lisse, rigide ou semi-rigide, et permettant aussi bien l'immobilisation axiale du tube dans l'embout que son extraction de celui-ci, caractérisé en ce qu'il comporte :

   a) - un manchon (1) définissant un logement cylindrique (1a) dont l'une des extrémités présente un alésage d'entrée (1b), de diamètre inférieur à celui du logement, la paroi du manchon présentant en outre au moins une fente longitudinale (1d) s'étendant seulement jusqu'au voisinage de l'alésage d'entrée

   b) - au moins une rondelle annulaire (2) constituant, de façon connue, une butée escamotable pour le tube à raccorder, dont le diamètre interne est voisin de et au plus égal à celui de l'alésage (1d), cependant que son diamètre externe est voisin de et au plus égal à celui du logement cylindrique (1a) du manchon

   c) - un organe élastique (3), par exemple un ressort hélicoïdal, ménageant un espace libre cylindrique dont le diamètre est au moins égal à celui de l'alésage d'entrée, ledit organe élastique prenant appui sur la rondelle (2), vers l'alésage d'entrée du manchon

   d) - une butée d'appui (4) pour l'organe élastique (3), disposée dans le logement cylindrique (1a) du manchon à l'extrémité opposée à celle de l'alésage d'entrée (1b)

   e) - enfin, une bague de déverrouillage (5) montée coulissante à l'extérieur du manchon et comportant une saillie radiale intérieure (5d) susceptible d'être engagée dans la fente (1d) du manchon et de prendre appui sur la rondelle (2), du côté opposé à l'organe élastique.

2. Dispositif selon la revendication 1, caractérisé en ce que le logement cylindrique (1a) du manchon présente une surface plane (1c) d'appui interne pour la rondelle, inclinée sur l'axe du manchon.

3. Dispositif selon la revendication 1, caractérisé en ce que la fente (1d) du manchon débouche à son extrémité opposée à l'alésage d'entrée (1b).

4. Dispositif selon la revendication 1, caractérisé en ce que la butée d'appui (4) est constituée par une plaque annulaire dont l'orifice central présente un diamètre au moins égal à celui de l'alésage d'entrée (1b), cependant que la périphérie extérieure de ladite plaque est engagée dans une rainure (1h) ménagée dans la surface intérieure du logement (1a) du manchon.

5. Dispositif selon la revendication 1, caractérisé en ce que l'une au moins des deux arêtes internes de la rondelle (2) est vive pour s'ancrer dans la surface extérieure du tube à raccorder.

6. Dispositif selon la revendication 1, caractérisé en ce que la rondelle (2) présente, sur sa périphérie extérieure, au moins une saillie radiale (2c) susceptible d'évoluer dans la fente du manchon.

7. Dispositif selon la revendication 2, caractérisé en ce qu'il est prévu sur la rondelle (2) deux saillies radiales (2c,2d) diamétralement opposées, et en ce que le manchon (1) présente deux fentes (1d et 1e), s'étendant seulement, du côté de l'alésage d'entrée, jusqu'à la surface plane d'appui (1c) intérieure au manchon.

# FIG.1b

# FIG.1a

5d

5a    5

5c

5b

2'c   2c   1d   1a   1f   1h   1g

1c

2'a

1b

2'

2

2d

4a

2a

3

2b

4b

4

2d

1e

F

# FIG.2

1d

4

1

2

2

1g

4a

1e

# FIG.3

2c

2b

2

2a

2d

EP 0 454 574 A1

EP 0 454 574 A1

FIG.4

FIG.5

Office européen
des brevets

**RAPPORT DE RECHERCHE EUROPEENNE**

Numero de la demande

EP    91 40 1084

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CH-A-462560 (BENGESSER ET AL.)<br>* figures 1, 2 *<br>--- | 1 | F16L37/084 |
| A | US-A-4842309 (LAVENE ET AL.)<br>* abrégé; figure 1 *<br>--- | 1 | |
| A | Soviet Inventions Illustrated<br>Derwent Publications Ltd., Section Mécanique,<br>semaine 8732, abrégé no.227880, Q67,19 août 1987<br>& SU-A-1280254 (MOSC MACH TOOL WKS)<br>30 décembre 1986<br>----- | 1 | |
| | | | **DOMAINES TECHNIQUES RECHERCHES (Int. Cl.5)**<br><br>F16L<br>F16B |

Le présent rapport a été établi pour toutes les revendications

| Lieu de la recherche | Date d'achèvement de la recherche | Examinateur |
|---|---|---|
| BERLIN | 02 AOUT 1991 | SCHAEFFLER C.A.A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P0402)